# EUROPEAN PATENT APPLICATION

(11) **EP 4 748 721 A1**
(43) Date of publication of application: **27.05.2026**
(21) Application number: 24845945.5
(22) Date of filing: 19.07.2024
(51) Int. Cl.: B64F 1/35, B64F 1/228, B60L 53/60, B60L 53/35, H02J 7/00, F16H 19/04, F16H 25/20, B60L 53/38

(54) **MOBILITY CHARGING ROBOT, CHARGING SYSTEM INCLUDING MOBILITY CHARGING ROBOT, MOBILITY CHARGING SYSTEM, METHOD FOR CONTROLLING MOBILITY CHARGING SYSTEM, VERTIPORT CHARGING SYSTEM, AND METHOD FOR CONTROLLING VERTIPORT CHARGING SYSTEM**

(30) Priority: 21.07.2023 KR 20230095391; 15.12.2023 KR 20230183633; 22.04.2024 KR 20240053346; 22.04.2024 KR 20240053347; 22.04.2024 KR 20240053476
(71) Applicant: Hyundai Elevator Co., Ltd., Chungju-si, Chungcheongbuk-do 27329 (KR)
(72) Inventor: KIM, Hyun Goo, Chungju-si Chungcheongbuk-do 27329 (KR); SONG, Joon Hyun, Chungju-si Chungcheongbuk-do 27329 (KR)
(74) Representative: Splanemann
(86) International application number: PCT/KR2024/010440
(87) International publication number: WO 2025/023643

(57) **Abstract**

A mobility charging robot is disclosed. The mobility charging robot includes: a mobile main body; a multi-joint body coupled to the mobile main body and provided with a gripper; and a transport device coupled to the mobile main body to transport the mobile main body. The transport device includes a vertical transport unit configured to move the mobile main body in a vertical direction.

## Description

### [Technical Field]

The present invention relates to a mobility charging robot, a charging system including the mobility charging robot, a mobility charging system and a method of controlling the mobility charging system, and a vertiport charging system and a method of controlling the vertiport charging system.

### [Background Art]

There is growing demand for reduction of exhaust emissions to prevent global warming. Development of new technologies and innovations in the transport sector are required to reduce emissions from ground transport, which accounts for about 16% of carbon dioxide emissions.

Urban air mobility (UAM) is currently emerging as an alternative to ground transport, enabling rapid transport of passengers and cargo by air within urban centers.

It is estimated that urban air mobility aircraft will reduce congestion and relieve environmental problems in urban centers due to use of electricity, and the market for urban air mobility aircraft is growing rapidly.

A vertical takeoff and landing site (vertiport) may include a takeoff/landing area where UAM aircraft can take off or land, and a hangar where the urban air mobility aircraft can be parked or charged.

One of the key performance indicators for vertiports, crucial components of UAM infrastructure, is the number of possible takeoffs and landings per minute. Since the number of possible takeoffs and landings per minute can affect the number of passengers carried, operating costs, and ground traffic congestion, improvement in the number of possible takeoffs and landings per minute is very important.

To improve the number of possible takeoffs and landings per minute, it is important to provide high-capacity fast charging for UAM aircraft. For example, charging of the UAM aircraft may be performed with a megawatt charging system (MCS) for fast charging of high capacity batteries.

On the other hand, high-capacity fast charging devices are difficult for a person to handle due to their heavy charging cables and charging plugs, and also present inherent safety risks associated with high voltage.

Moreover, although various vehicles using electric energy, including electric vehicles, are developed in the art, it is difficult to charge a plurality of parked mobility vehicles with high voltage.

### [Disclosure]

### [Technical Problem]

It is one aspect of the present invention to provide a mobility charging system that improves the number of possible takeoffs and landings of mobility vehicles per minute by simplifying movement of a charging robot between hangars.

It is another aspect of the present invention to provide a mobility charging system that enables safer and high-capacity fast charging using a charging robot including a multi-joint body.

It is a further aspect of the present invention to provide a charging system using a mobility charging robot capable of fast-charging various vehicles through vertical and horizontal movement.

It is yet another aspect of the present invention to provide a mobility charging system that can improve charging effects of vehicles through interlocking control with a parking robot, and a method of controlling the same.

It is yet another aspect of the present invention to provide a vertiport charging system capable of charging an air mobility vehicle parked on each floor in a hangar of a vertiport, and a method of controlling the same.

It is yet another aspect of the present invention to provide a vertiport charging system capable of efficiently implementing a charging process and charging management using air mobility parking of a vertiport, and state-of-charge and flight information of aircraft, and a method of controlling the same.

It is yet another aspect of the present invention to provide an air mobility charging system that can effectively implement charging-related control through interlocking control of an air mobility transport device and a mobile charging unit in a vertiport and can improve the number of possible takeoffs and landings of air mobility vehicles per minute, and a method of controlling the same.

### [Technical Solution]

In accordance with one aspect of the present invention, a mobility charging robot includes: a mobile main body; a multi-joint body coupled to the mobile main body and provided with a gripper; and a transport device configured to transport the mobile main body, wherein the transport device includes a vertical transport unit configured to move the mobile main body in a vertical direction.

The gripper may be provided with a positioning unit configured to determine locations of a charging plug and a charging port of a mobility vehicle.

The vertical transport unit may include a ball screw, a ball nut meshed with the ball screw, and a vertical transport motor rotating the ball screw.

The vertical transport unit may further include a transport body coupled to the ball nut and the mobile main body may be coupled to the transport body.

The transport device may further include a horizontal transport unit configured to move the mobile main body in a horizontal direction.

The horizontal transport unit may include a rack gear, a pinion gear meshed with the rack gear, and a horizontal transport motor rotating the pinion gear.

In accordance with a further aspect of the present invention, a mobility charging system includes: a mobility charging device configured to charge a mobility vehicle; a mobility parking robot configured to transport the mobility vehicle; and a mobility charging management unit configured to transmit and receive charging-related information to and from the mobility charging device and the mobility parking robot and to manage charging of the mobility vehicle.

The mobility charging management unit may include a controller using flight information and state-of-charge information of the mobility vehicle and controlling operation of the mobility charging device and the mobility parking robot.

The mobility charging device may include a wireless charging robot-transceiver module, the mobility parking robot may include a wireless parking robot-transceiver module, and the mobility charging management unit may include a wireless charging management unit-transceiver module configured to transmit and receive parking and charging-related information to and from the wireless charging robot-transceiver module and the wireless parking robot-transceiver module.

The mobility parking robot may include a loading unit configured to hold and support the mobility vehicle, and a mobile base configured to transport the mobility vehicle.

The mobility charging device may include: a mobility charging robot and a charger dispenser, the mobility charging robot including a mobile main body, a multi-joint body coupled to the mobile main body and provided with a gripper, and a transport device configured to move the mobile main body; the transport device may include a vertical transport module configured to move the mobile main body in a vertical direction; and power for charging the mobility vehicle may be supplied to the charger dispenser.

The gripper may be provided with a positioning unit configured to determine locations of a charging plug of the charger dispenser and a charging port of the mobility vehicle.

The transport device may further include a horizontal transport unit configured to move the mobile main body in a horizontal direction.

The charger dispenser may include a charging plug coupled to a charging port of the mobility vehicle by the gripper, and a charging cable to which the charging plug is coupled.

In accordance with yet another aspect of the present invention, a vertiport charging system includes: a mobile charging unit including a wireless charging unit communication module and configured to charge an air mobility vehicle parked in a vertiport; a charger dispenser supplied with power for charging the air mobility vehicle and disposed in a hangar of the vertiport; an air mobility transport unit including a wireless transport unit communication module and configured to transport the air mobility vehicle within the vertiport; and a vertiport charging management unit including a wireless charging management unit communication module and configured to control charging of the air mobility vehicle through control of the mobile charging unit and the air mobility transport unit.

### [Advantageous Effects]

Embodiments of the present invention provide a mobility charging system that can efficiently implement high-capacity fast charging, charging control and charging management of air mobility vehicles parked in a vertiport.

Specifically, a charging robot can quickly move from one floor to another floor in a hangar of a vertiport through a vertical transport unit, thereby enabling faster charging of a parked vehicle while improving the number of possible takeoffs and landings per minute.

Embodiments of the present invention provide a simpler, safer, and more reliable vertiport air mobility charging system through a multi-joint structure and vertical and horizontal movement of a charging robot.

Embodiments of the present invention provide a mobility charging system that can achieve fast charging of various types of vehicles through vertical and horizontal movement of a charging robot.

Embodiments of the present invention provide a mobility charging system that enables faster, safer, and more efficient charging through interlocking control of a parking robot and a charging robot.

Embodiments of the present invention provide a mobility charging system that enables efficient and accurate charging of an air mobility vehicle within a vertiport.

Embodiments of the present invention provide a mobility charging system that enables effective charging of air mobility vehicles by matching a flight schedule of air mobility vehicles taking off or landing at a vertiport with a charging schedule, and enables integrated management of charging, transport, and parking of the air mobility vehicles at the vertiport.

Embodiments of the present invention provide a mobility charging system that enables high capacity fast charging, charging control, and charging management for an air mobility vehicle at a vertiport, thereby improving the number of possible takeoffs and landings per minute at the vertiport.

Embodiments of the present invention provide a mobility charging system that enables carbon reduction and contributes to ESG management by implementing efficient transport, charging, and flight scheduling of air mobility vehicles located in a vertiport.

### [Description of Drawings]

FIG. 1 is a schematic block diagram of a mobility charging system according to the present invention.
FIG. 2 is a schematic view of a mobility charging system according to one embodiment of the present invention.
FIG. 3 is a schematic view of a transport device according to a first embodiment in the mobility charging robot shown in FIG. 2.
FIG. 4 is a schematic view of a transport device according to a second embodiment in the mobility charging robot shown in FIG. 2.
FIG. 5 is a schematic view illustrating a first operational mode of the mobility charging system shown in FIG. 2.
FIG. 6 is a schematic view illustrating a second operational mode of the mobility charging system shown in FIG. 2.
FIG. 7 is a schematic block diagram of a mobility charging system according to one embodiment of the present invention.
FIG. 8 is a schematic block diagram of a charging device in the mobility charging system shown in FIG. 7.
FIG. 9 is a schematic view of a mobility charging robot, a charger dispenser, and a mobility parking robot in the mobility charging system shown in FIG. 7.
FIG. 10 is a schematic view of a transport device according to a first embodiment in the mobility charging robot shown in FIG. 9.
FIG. 11 is a schematic view of a transport device according to a second embodiment in the mobility charging robot shown in FIG. 9.
FIG. 12 is a schematic view illustrating a first operational mode of the mobility charging system according to the embodiment of the present invention.
FIG. 13 is a schematic view illustrating a second operational mode of the mobility charging system according to the embodiment of the present invention.
FIG. 14 is a flowchart schematically illustrating a method of controlling the mobility charging system according to the embodiment of the present invention.
FIG. 15 is a schematic block diagram of a vertiport charging system according to one embodiment of the present invention.
FIG. 16 is a schematic view illustrating some configuration of the vertiport charging system according to the embodiment of the present invention.
FIG. 17 is a schematic view illustrating some configuration of a vertiport charging system according to another embodiment of the present invention.
FIG. 18 is a schematic block diagram of a mobile charging unit in the vertiport charging system according to the embodiment of the present invention.
FIG. 19 is a schematic view of a transporting device according to a first embodiment in the mobile charging unit shown in FIG. 18.
FIG. 20 is a schematic view of a transporting device according to a second embodiment in the mobile charging unit shown in FIG. 18.
FIG. 21 is a schematic view illustrating a first operational mode of the vertiport charging system according to the embodiment of the present invention.
FIG. 22 is a schematic view illustrating a second operational mode of the vertiport charging system according to the embodiment of the present invention.
FIG. 23 is a flowchart schematically illustrating a method of controlling the vertiport charging system according to the embodiment of the present invention.

### [Best Mode]

Hereinafter, exemplary embodiments of the present invention will be described in detail with reference to the accompanying drawings such that the present invention may be easily implemented by those skilled in the art. It should be understood that the present invention may be embodied in different ways and is not limited to the following embodiments.

In the drawings, portions irrelevant to the description will be omitted for clarity. Like components will be denoted by like reference numerals throughout the specification. Like components will be denoted by like reference numerals throughout the specification.

As used herein, the terms "includes", "comprises", "including" and/or "comprising" specify the presence of stated features, steps, operations, elements, and/or components, but do not preclude the presence or addition of one or more other features, steps, operations, elements, components, and/or groups.

It will be understood that the invention described in this disclosure is not intended to be limited to any particular embodiment, and includes various modifications, equivalents, and/or alternatives to the embodiments of this disclosure.

As used herein, the expression "configured to" may be used interchangeably with, for example, "suitable for", "having the capacity to", "designed to", "adapted to", "made to", or "capable of" depending on the context. The expression "configured (or set up) to" may not necessarily mean "specifically designed to" in a hardware sense. Instead, in a certain context, the expression "a device configured to" may mean that the device is "capable of" doing something in conjunction with other devices or components.

It will be understood that the related literature described in this disclosure is incorporated herein by reference in its entirety and that a person having ordinary skill in the art will be able to apply what is described in the related literature to the matters briefly described herein.

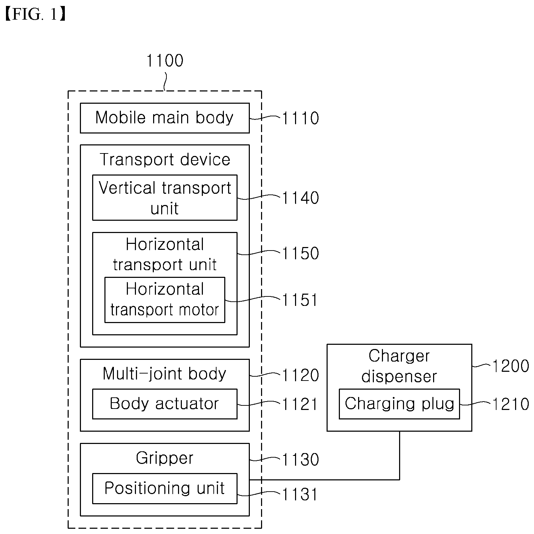

FIG. 1 is a schematic block diagram of a mobility charging system according to the present invention.

Referring to FIG. 1, a mobility charging system 1000 includes a charging robot 1100 and a charger dispenser 1200.

More specifically, the charging robot 1100 includes a mobile main body 1110, a multi-joint body 1120, a gripper 1130, and a transport device 1140, 1150.

The charger dispenser 1200 supplies power to a battery of a mobility vehicle and includes a charging plug 1210.

The transport device 1140, 1150 transports the mobile main body 1110 of the mobility charging robot.

The transport device 1140, 1150 may be mounted on the mobile main body 1110 to move the mobile main body 1110.

The transport device 1140, 1150 may be disposed outside the mobile main body 1110 to transport the mobile main body 1110.

The transport device 1140, 1150 may include a vertical transport unit 1140 and a horizontal transport unit 1150.

The vertical transport unit 1140 moves the mobility charging robot in a vertical direction. Accordingly, the vertical transport unit 1140 can move the mobility charging robot from one floor to another floor of a hangar in a vertiport.

The vertical transport unit 1140 may be implemented by a ball screw or a timing belt in various ways.

The horizontal transport unit 1150 moves the mobility charging robot in a horizontal direction. Accordingly, the horizontal transport unit 1150 can charge a plurality of mobility vehicles while moving the mobility charging robots laterally on a corresponding floor of the hangar.

Next, the multi-joint body 1120 includes a body actuator 1121.

The body actuator 1121 moves each joint of the multi-joint body 1120.

The gripper 1130 couples the charging plug 1210 of the charger dispenser 1200 to a charging port of the mobility vehicle.

The gripper 1130 is mounted on the multi-joint body 1120.

The gripper 1130 may be provided to a distal end of the multi-joint body 1120.

The gripper 1130 may include a positioning unit 1131.

The positioning unit 1131 determines locations of the charging plug 1210 of the charger dispenser 1200 and the charging port of the mobility vehicle.

The positioning unit 1131 may include a camera module or a proximity sensor.

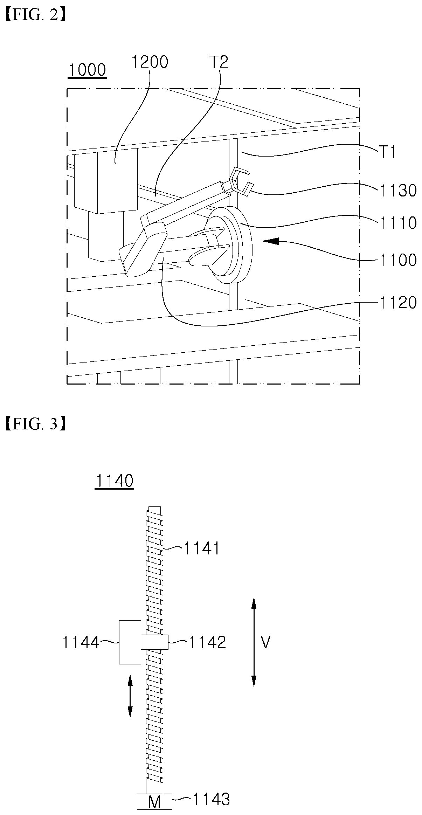

FIG. 2 is a schematic view of a mobility charging system according to a first embodiment of the present invention.

Referring to FIG. 2, the mobility charging system 1000 includes a charging robot 1100 and a charger dispenser 1200.

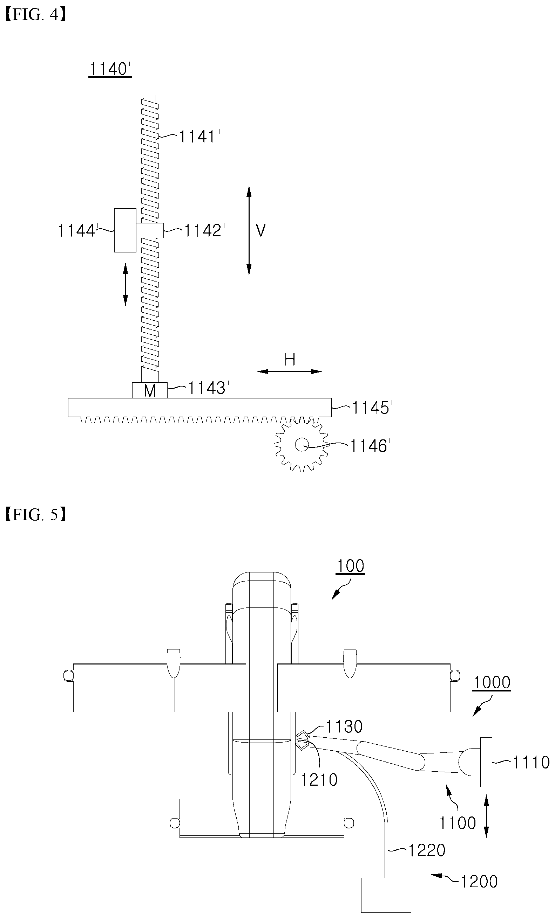

The charging robot 1100 couples the charging plug 1210 (see FIG. 5) of the charger dispenser 1200 to the charging port of the mobility vehicle.

To this end, the charging robot 1100 includes a mobile main body 1110, a multi-joint body 1120, a gripper 1130, and a transport device 1140 (see FIG. 3) or 1140' (see FIG. 4).

The multi-joint body 1120 is coupled to the mobile main body 1110.

The body actuator 1121 (see FIG. 1) may be coupled to the mobile main body 1110 to actuate the multi-joint body 1120.

That is, the body actuator selectively moves the multi-joint body 1120 including a plurality of articulated members.

To this end, a servomotor, a stepper motor, or the like may be disposed between the articulated members. This structure allows the multi-joint body 1120 to implement various movements at various angles in a three-dimensional space, and can facilitate coupling of the charging plug 1210 of the charger dispenser 1200 to the charging port of the mobility vehicle.

The mobile main body 1110 may be connected to a transport device and may be transported by the transport device in the horizontal or vertical direction.

Further, the mobile main body 1110 may be guided along a vertical path T1 and a horizontal path T2 of a parking building of the mobility vehicle.

The parking building of the mobility vehicle may be implemented by a vertiport.

The transport device may include a vertical transport unit 1140 (see FIG. 1) and a horizontal transport unit 1150 (see FIG. 1).

The vertical transport unit may move the mobile main body 1110 along the vertical path T1 and the horizontal transport unit may move the mobile main body 1110 along the horizontal path T2.

In this embodiment, when the horizontal transport unit moves the mobile main body 1110 along the horizontal path T2, the mobile charging unit 1100 may control the location of the multi-joint body 1120 such that the horizontal movement of the mobile charging unit 1100 is not obstructed by the charger dispenser 1200.

Alternatively, the charger dispenser 1200 may be disposed so as not to obstruct the horizontal movement of the mobile charging unit 1100 when the mobile main body 1110 moves along the horizontal path T2.

The gripper 1130 may be coupled to the distal end of the multi-joint body 1120.

The gripper 1130 may be provided with a camera module or proximity sensor to determine the locations of the charger plug of the charger dispenser 1200 and the charging port of the mobility vehicle.

The gripper 1130 may be provided with a gripper actuator (not shown).

The gripper actuator actuates the gripper 1130. The gripper actuator may include a servomotor, a stepper motor, a DC motor, or the like, and may be operated to allow the gripper 1130 to grip the charging plug 1210.

FIG. 3 is a schematic view of a transport device according to a first embodiment in the mobility charging robot shown in FIG. 2.

More specifically, the transport device refers to the vertical transport unit 1140 and is configured to move the mobile main body 1110 (see FIG. 2) in the vertical direction V.

That is, the vertical transport unit 1140 moves the mobile main body from one floor to another floor of a hangar of the vertiport.

To this end, the vertical transport unit 1140 may include a ball screw 1141, a ball nut 1142, and a vertical transport motor 1143.

The ball screw 1141 is disposed to extend in the vertical direction V of the vertiport, i.e., in a floor-to-floor direction.

The ball nut 1142 is coupled to the ball screw 1141.

The ball screw 1141 is coupled to the vertical transport motor 1143.

The ball screw 1141 is rotated by operation of the vertical transport motor 1143 and the ball nut 1142 is raised or lowered by rotation of the ball screw 1141.

The mobile main body 1110 (see FIG. 2) is coupled to the ball nut 1142 to be raised or lowered together with the ball nut 1142.

The vertical transport unit 1140 may further include a transport body 1144 coupled to the ball nut 1142.

The mobile main body 1110 is coupled to the transport body 1144, and the transport body 1144 and the mobile main body 1110 may be raised or lowered by operation of the vertical transport motor 1143.

FIG. 4 is a schematic view of a transport device according to a second embodiment in the mobility charging robot shown in FIG. 2.

More specifically, a transport device 1140' includes a horizontal transport unit in addition to the vertical transport unit 1140 shown in FIG. 3.

Referring to FIG. 4, the transport device 1140' includes a ball screw 1141', a ball nut 1142', a vertical transport motor 1143', a transport body 1144', a rack gear 1145', a pinion gear 1146', and a horizontal transport motor 1151 (see FIG. 1).

The ball screw 1141', the ball nut 1142', the vertical transport motor 1143', and the transport body 1144' are the same as the ball screw 1141, the ball nut 1142, the vertical transport motor 1143, and the transport body 1144 shown in FIG. 3, and detailed descriptions thereof will be omitted herein.

The vertical transport motor 1143' is coupled to the rack gear 1145'.

The rack gear 1145' is mated with the pinion gear 1146', which is coupled to the horizontal transport motor 1151 (see FIG. 1).

In the transport device 1140' according to the second embodiment constructed as described above, when the pinion gear 1146' is rotated by operation of the horizontal transport motor 1151, the rack gear 1145' may be moved linearly, i.e., in the horizontal direction H, in conjunction with rotation of the pinion gear 1146'. In addition, the vertical transport motor 1143', the ball screw 1141', the ball nut 1142', and the transport body 1144' are moved in the horizontal direction in conjunction with movement of the rack gear 1145'.

Accordingly, the transport device 1140' can transport the transport body 1144' in the horizontal direction H or in the vertical direction V.

That is, the mobile main body 2110' coupled to the transport body 1144' may be transported from one floor to another floor of the hangar of the vertiport in the vertical direction V, and may be transported on the corresponding floor in the horizontal direction H.

FIG. 5 is a schematic view illustrating a first operation mode of the mobility charging system shown in FIG. 2.

Referring to FIG. 5, a mobility vehicle 100 parked in a hangar is charged by the mobility charging system 1000.

More specifically, the mobility charging robot 1100 couples the charging plug 1210 of the charger dispenser 1200 to the charging port (not shown) of the mobility vehicle.

To this end, the mobile main body 1110 of the mobility charging robot 1100 may be transported toward a corresponding floor of the hangar, at which the mobility vehicle 100 is parked, in the vertical direction, and may be transported on the corresponding floor in the horizontal direction.

Here, the mobile main body 1110 may be transported to an optimal position on the corresponding floor of the hangar to couple the charging plug of the charger dispenser 1200 to the charging port of the mobility aircraft.

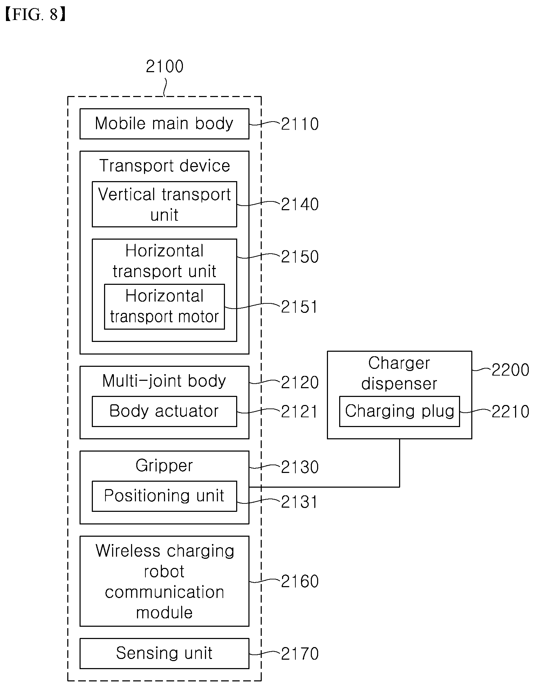

A positioning unit 2131 (see FIG. 8) mounted on the gripper 1130 of the mobility charging robot 1100 may determine the locations of the charging plug 1210 of the charger dispenser 1200 and the charging port of the mobility vehicle 100.

The gripper 1130 withdraws the charging plug 1210 from the charger dispenser 1200 and couples the charging plug 1210 to the charging port of the mobility vehicle 100 with a charging cable 1220 connected to the charging plug 1210.

With the structure described above, the mobility charging robot can safely and quickly charge the mobility vehicle.

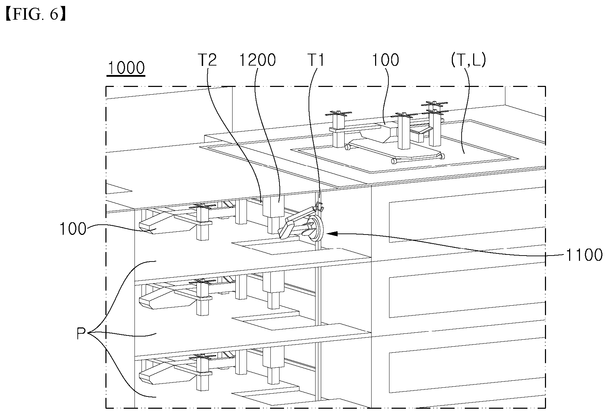

FIG. 6 is a schematic view illustrating a second operational mode of the mobility charging system shown in FIG. 2.

More specifically, the mobility charging system 1000 may be applied to vertical takeoff and landing sites (vertiports) for urban air mobility aircraft.

A vertical takeoff and landing site (vertiport) may include a takeoff area T, a landing area L, and a hangar P.

The vertiport may be constructed on a rooftop of a building.

In addition, the hangar of the vertiport may have a multi-story structure, and each of the takeoff area and the landing area may be selectively located on the rooftop of the building or on a rooftop of the hangar.

The mobility vehicle 100 may be transported to the landing area L, the hangar P, and the takeoff area T by a mobility transport device, and may be parked in the hangar P.

The mobility charging robot 1100 may charge the parked mobility vehicles 100 while moving in the vertical direction, that is, in the floor-to-floor direction of the hangar P, through the vertical transport unit.

Here, the charger dispenser 1200 may be provided to each floor in the hangar.

The mobility charging robot 1100 may be moved to a charging area to charge the mobility vehicle 100 while being guided along the vertical path T1 and the horizontal path T2 of the vertiport.

In this embodiment, one example of the mobility charging robot 1100 applied to the vertiport has been described above.

In another embodiment, the mobility charging robot 1100 may be applied to a parking tower for automobiles to perform charging of automobiles.

Furthermore, the mobility charging robot 1100 may be applied as a charging device for various vehicles.

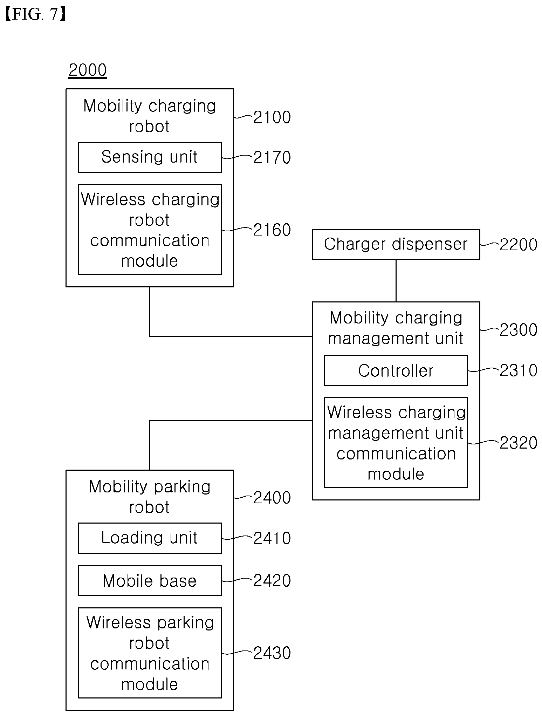

FIG. 7 is a schematic block diagram of a mobility charging system according to one embodiment of the present invention.

Referring to FIG. 7, a mobility charging system 2000 may include a mobility charging robot 2100, a charger dispenser 2200, a mobility charging management unit 2300, and a mobility parking robot 2400.

More specifically, a mobility charging device may include the mobility charging robot 2100 and the charger dispenser 2200.

The charger dispenser 2200 supplies power for charging to a mobility vehicle.

The mobility charging robot 2100 may include a wireless charging robot communication module 2160 and a sensing unit 2170.

The wireless charging robot communication module 2160 transmits and receives location information and charging-related information to and from the mobility parking robot 2400 and the mobility charging management unit 2300.

The sensing unit 2170 identifies a location of the mobility vehicle and may include a camera module or a proximity sensor.

The mobility parking robot 2400 transports the mobility vehicle.

The mobility parking robot 2400 may include a loading unit 2410, a mobile base 2420, and a wireless parking robot communication module 2430.

The loading unit 2410 holds and supports the mobility vehicle.

The mobile base 2420 moves the mobility parking robot 2400 to a hangar, a takeoff area, a landing area, or the like.

The wireless parking robot communication module 2430 transmits and receives location, parking, and charging-related information to and from the mobility charging robot 2100 and the mobility charging management unit 2300.

The mobility charging management unit 2300 may perform charging-related control with respect to the mobility charging robot 2100 and the charger dispenser 2200.

The mobility charging management unit 2300 may control operation of the mobility parking robot 2400.

To this end, the mobility charging management unit 2300 may include a controller 2310 and a wireless charging management unit communication module 2320.

The controller 2310 may control the mobility charging device 2100, 2200 and the mobility parking robot 2400 using information, such as flight information, information about the state of charge of the mobility vehicle, and the like.

The wireless charging management unit communication module 2320 may transmit and receive charging-related information to and from the mobility charging robot 2100 and the mobility parking robot 2400.

The controller 2310 may selectively control output power for a plurality of charger dispensers 2200 for ultra-fast charging.

For example, in a configuration with a 3 MW power converter and 3 sets of dispensers, the controller 2310 may set a first dispenser to an output power of 2 MW, a second dispenser to an output power of 1 MW, and a third dispenser to an idle mode, instead of setting every dispenser to an output power of 1 MW.

With this configuration, the mobility charging management unit 2300 can efficiently charge the mobility vehicle.

In the mobility charging system constructed as described above, the mobility charging robot 2100 may transmit and receive charging-related information to and from the mobility parking robot 2400 and can perform charging of the mobility vehicle under control of the mobility charging management unit 2300 while checking the location of the mobility vehicle.

FIG. 8 is a schematic block diagram of the charging device in the mobility charging system shown in FIG. 7.

Referring to FIG. 8, a mobility charging device includes the mobility charging robot 2100 and the charger dispenser 2200.

More specifically, the mobility charging robot 2100 includes a mobile main body 2110, a multi-joint body 2120, a gripper 2130, a transport device 2140, 2150, a wireless charging robot communication module 2160, and a sensing unit 2170.

The charger dispenser 2200 supplies power to the mobility vehicle and includes a charging plug 2210.

The transport device 2140, 2150 of the mobility charging robot 2100 moves the mobile main body 2110.

The transport device 2140, 2150 may be mounted on the mobile main body 2110 to move the mobile main body 2110.

The transport device 2140, 2150 may be disposed outside the mobile main body 2110 to move the mobile main body 2110.

The transport device 2140, 2150 may include a vertical transport unit 2140 and a horizontal transport unit 2150.

The vertical transport unit 2140 moves the mobility charging robot in the vertical direction. Accordingly, the vertical transport unit 2140 can move the mobility charging robot from one floor to another floor of a hangar in a vertiport.

The vertical transport unit 2140 may be implemented by a ball screw or a timing belt in various ways.

The horizontal transport unit 2150 moves the mobility charging robot in the horizontal direction. Accordingly, the horizontal transport unit 2150 can charge a plurality of mobility vehicles while moving the mobility charging robots laterally on a corresponding floor of the hangar.

The horizontal transport unit 2150 includes a horizontal transport motor 2151.

Next, the multi-joint body 2120 includes a body actuator 2121.

The body actuator 2121 moves each joint of the multi-joint body 2120.

That is, the body actuator selectively moves the multi-joint body 2120 including a plurality of articulated members. A servomotor, a stepper motor, or the like may be disposed between the articulated members. This structure allows the multi-joint body 2120 to implement various movements at various angles in a three-dimensional space, and can facilitate coupling of the charging plug 2210 of the charger dispenser 2200 to the charging port of the mobility vehicle.

The gripper 2130 couples the charging plug 2210 of the charger dispenser 2200 to a charging port of the mobility vehicle.

The gripper 2130 is mounted on the multi-joint body 2120.

The gripper 2130 may be provided to a distal end of the multi-joint body 2120.

The gripper 2130 may be rotatably coupled to the multi-joint body 2120.

The gripper 2130 may include a positioning unit 2131.

The positioning unit 2131 determines locations of the charging plug 2210 of the charger dispenser 2200 and the charging port of the mobility vehicle.

The positioning unit 2131 may include a camera module or a proximity sensor.

As described above, the wireless charging robot communication module 2160 transmits and receives location information and charging-related information to and from the mobility parking robot 2400 and the mobility charging management unit 2300.

The sensing unit 2170 identifies a location of the mobility vehicle and may include a camera module or a proximity sensor.

The gripper 2130 may be provided with a gripper actuator (not shown).

The gripper actuator actuates the gripper 2130. The gripper actuator may include a servomotor, a stepper motor, a DC motor, or the like, and may be operated to allow the gripper 2130 to grip the charging plug 2210.

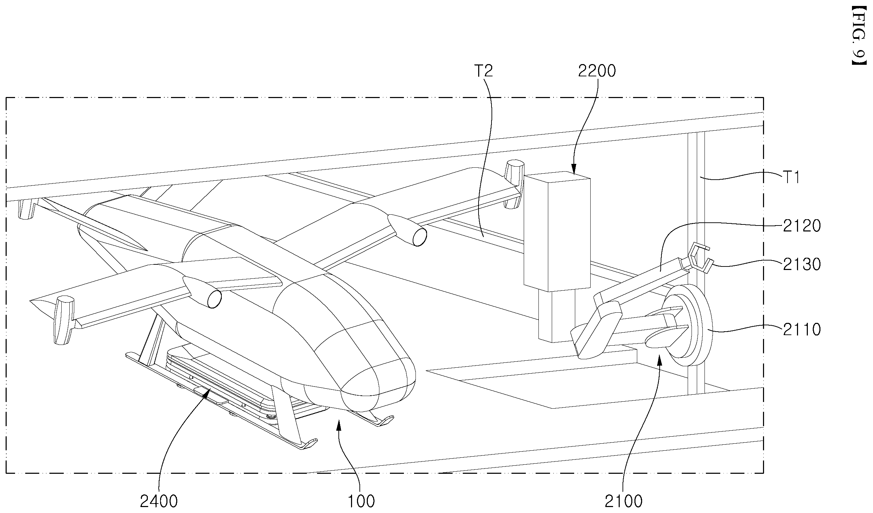

FIG. 9 is a schematic view of the mobility charging robot, the charger dispenser, and the mobility parking robot in the mobility charging system shown in FIG. 7.

Referring to FIG. 9, the mobility charging system includes the mobility charging device 2100, 2200 and the mobility parking robot 2400.

The mobility charging device may include the mobility charging robot 2100 and the charger dispenser 2200.

The mobility charging robot 2100 may include the multi-joint body 2120 and the gripper 2130 for connecting the charging plug 2210 of the charger dispenser 2200 (see FIG. 8) to the charging port of the mobility vehicle 100.

With the structure described above, the mobility parking robot 2400 with the mobility vehicle 100 loaded thereon may be moved to be adjacent to the mobility charging device 2100, 2200.

That is, the mobility parking robot 2400 moves the mobility vehicle 100 loaded thereon to a location where the mobility vehicle 100 can be charged by the mobility charging device 2100, 2200.

Here, with the mobility vehicle loaded on the mobility parking robot 2400, the mobility parking robot 2400 may be located within a charging available distance of the multi-joint body 2120 and the gripper 2130 of the mobility charging robot 2100.

By way of example, the mobility parking robot 2400 may position the mobility vehicle 100 in a preset parking area within the hangar. The preset parking area may be provided with the charger dispenser 2200, and the charging available distance may refer to a distance that the charging plug 2210 can be connected to the mobility vehicle 100 by the multi-joint body 2120 and the gripper 2130.

The mobility charging robot 2100 may be moved to a charging area to charge the mobility vehicle 100 while being guided along the vertical path T1 and the horizontal path T2 of the vertiport.

In this embodiment, when the horizontal transport unit moves the mobile main body 2110 along the horizontal path T2, the mobile charging unit 2100 may control the location of the multi-joint body 2120 such that the horizontal movement of the mobile charging unit 2100 is not obstructed by the charger dispenser 2200.

Alternatively, the charger dispenser 2200 may be disposed so as not to obstruct the horizontal movement of the mobile charging unit 2100 when the mobile main body 2110 moves along the horizontal path T2.

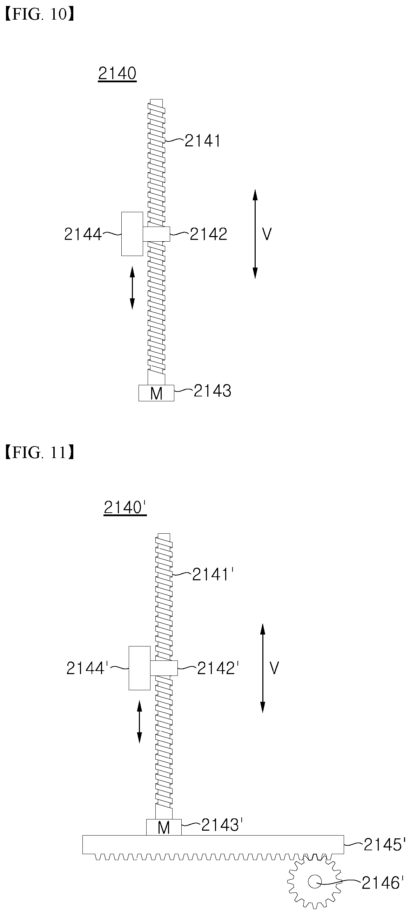

FIG. 10 is a schematic view of a transport device according to a first embodiment in the mobility charging robot shown in FIG. 9.

More specifically, the transport device refers to the vertical transport unit 2140 and is configured to move the mobile main body 2110 (see FIG. 8) in the vertical direction V.

That is, the vertical transport unit 2140 moves the mobile main body 2110 from one floor to another floor of a hangar of the vertiport.

To this end, the vertical transport unit 2140 may include a ball screw 2141, a ball nut 2142, and a vertical transport motor 2143.

The ball screw 2141 is disposed to extend in the vertical direction V of the vertiport, i.e., in the floor-to-floor direction.

The ball nut 2142 is coupled to the ball screw 2141.

The ball screw 2141 is coupled to the vertical transport motor 2143.

The ball screw 2141 is rotated by operation of the vertical transport motor 2143 and the ball nut 2142 is raised or lowered by rotation of the ball screw 2141.

The mobile main body 2110 is coupled to the ball nut 2142 to be raised or lowered together with the ball nut 2142.

The transport device 2140 may further include a transport body 2144 coupled to the ball nut 2142.

The mobile main body 2110 is coupled to the transport body 2144, and the transport body 2144 and the mobile main body 2110 may be raised or lowered by operation of the vertical transport motor 2143.

FIG. 11 is a schematic view of a transport device according to a second embodiment in the mobility charging robot shown in FIG. 9.

More specifically, a transport device 2140' includes a horizontal transport unit in addition to the vertical transport unit 2140 shown in FIG. 10.

Referring to FIG. 11, the transport unit 2140' includes a ball screw 2141', a ball nut 2142', a vertical transport motor 2143', a transport body 2144', a rack gear 2145', a pinion gear 2146', and a horizontal transport motor 2151 (see FIG. 8).

The ball screw 2141', the ball nut 2142', the vertical transport motor 2143', and the transport body 2144' are the same as the ball screw 2141, the ball nut 2142, the vertical transport motor 2143, and the transport body 2144 shown in FIG. 10, and detailed descriptions thereof will be omitted herein.

The vertical transport motor 2143' is coupled to the rack gear 2145'.

The rack gear 2145' is mated with the pinion gear 2146', which is coupled to the horizontal transport motor 2151 (see FIG. 8).

In the transport device 2140' according to the second embodiment constructed as described above, when the pinion gear 2146' is rotated by operation of the horizontal transport motor, the rack gear 2145' may be moved linearly, i.e., in the horizontal direction H (see FIG. 4), in conjunction with rotation of the pinion gear 2146'. In addition, the vertical transport motor 2143', the ball screw 2141', the ball nut 2142', and the transport body 2144' are moved in the horizontal direction in conjunction with movement of the rack gear 2145'.

Accordingly, the transport device 2140' can transport the transport body 2144' in the horizontal direction H or in the vertical direction V.

That is, the mobile main body 2110 coupled to the transport body 2144' may be transported from one floor to another floor of the hangar of the vertiport in the vertical direction V, and may be transported on the corresponding floor in the horizontal direction H.

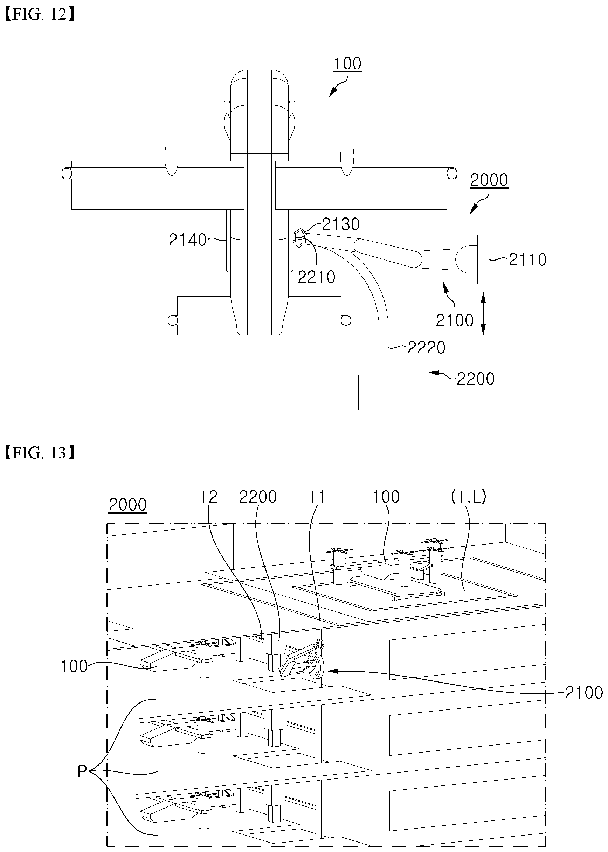

FIG. 12 is a schematic view illustrating a first operation mode of a mobility charging system according to one embodiment of the present invention.

Referring to FIG. 12, a mobility vehicle 100 parked in a hangar is charged by the mobility charging device 2100, 2200.

To this end, the mobility charging management unit 2300 (see FIG. 7) moves the mobility parking robot 2400 with the mobility vehicle 100 loaded thereon to a charging area.

Here, the mobility charging management unit 2300 may control movement of the mobility parking robot 2400 to a corresponding location in the hangar in consideration of flight information and a state of charge of the mobility vehicle.

With the mobility vehicle 100 loaded on the mobility parking robot 2400, the mobility parking robot 2400 is moved to the charging area of the mobility charging robot 2100.

Next, the mobile main body 2110 of the mobility charging robot 2100 is vertically transported to a floor where the mobility vehicle is parked.

In addition, the mobile main body 2110 may be horizontally transported to an optimal position to couple the charging plug of the charger dispenser 2200 to the charging port of the mobility vehicle on the corresponding floor.

The mobility charging robot 2100 couples the charging plug of the charger dispenser 2200 to the charging port (not shown) of the mobility vehicle.

Here, a camera module or a sensor, which corresponds to the positioning unit 2131 (see FIG. 8) mounted on the gripper 2130 of the mobility charging robot 2100, determines the location of the charging plug 2210 of the charger dispenser.

Then, when the charging plug 2210 is withdrawn from the charger dispenser 2200, the gripper 2130 couples the charging plug 2210 to the charging port of the mobility vehicle 100, with the charging plug 2210 connected to the charging cable 2220.

With the structure described above, the mobility charging system enables mobility vehicles to be charged safely and quickly using the mobility charging robot.

FIG. 13 is a schematic view illustrating a second operational mode of the mobility charging system according to the embodiment of the present invention.

More specifically, the mobility charging system 2000 may be applied to vertical takeoff and landing sites (vertiports) for urban air mobility aircraft.

A vertical takeoff and landing site (vertiport) may include a takeoff area T, a landing area L, and a hangar P.

The vertiport may be constructed on a rooftop of a building.

In addition, the hangar of the vertiport may have a multi-story structure, and each of the takeoff area and the landing area may be selectively located on the rooftop of the building or on a rooftop of the hangar.

A mobility vehicle 100 may be transported to the landing area L, the hangar P, and the takeoff area T by the mobility parking robot 2400 (see FIG. 7), and may be parked in the hangar P.

The mobility charging robot 2100 may charge the parked mobility vehicle 100 while moving in the vertical direction, which corresponds to the floor-to-floor direction of the hangar P, through the vertical transport unit.

Here, the charger dispenser 2200 may be provided to each floor in the hangar.

The mobility charging robot 2100 may be moved to a charging area to charge the mobility vehicle 100 while being guided along the vertical path T1 and the horizontal path T2 of the vertiport.

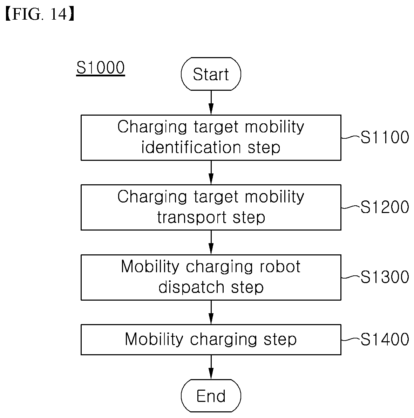

FIG. 14 is a flowchart schematically illustrating a method of controlling the mobility charging system according to the embodiment of the present invention.

Referring to FIG. 14, a method of controlling the mobility charging system (S1000) includes a charging target mobility identification step (S1100), a charging target mobility transport step (S1200), a mobility charging robot dispatch step (S1300), and a mobility charging step (S1400).

More specifically, in the charging target mobility identification step (S1100), a charging target mobility vehicle is identified among mobility vehicles located on a landing area.

The mobility charging management unit 2300 (see FIG. 7) may identify a mobility vehicle required to be charged, and may transmit the identified information to each of the mobility parking robot 2400 (see FIG. 7) and the mobility charging robot 2100 (see FIG. 7).

In the charging target mobility transport step (S1200), the mobility parking robot transports the charging target mobility vehicle to a charging area of the hangar.

Here, the mobility parking robot 2400 (see FIG. 7) may obtain charging-related information from the mobility charging management unit and may transport the mobility vehicle to the corresponding charging area of the hangar.

In addition, the mobility parking robot may transmit information about a transport time and a transport distance to the mobility charging management unit, which in turn may transmit charging-related information to the mobility charging robot based on the information in real time.

That is, the mobility charging management unit may control dispatch and charging operation of the mobility charging robot in consideration of information about a time of arrival of the mobility parking robot at the charging area and a mobility vehicle to be charged preferentially among mobility vehicles.

In the mobility charging robot dispatch step (S1300), the mobility charging robot is dispatched to the charging area.

In the mobility charging step S1400, a charging plug is coupled to a charging port of the mobility vehicle.

The mobility charging step S1400 may include a charging plug positioning step and a charging port positioning step.

That is, the positioning unit 2131 (see FIG. 8) mounted on the gripper 2130 of the mobility charging robot 2100 may determines the locations of the charging plug 2210 of the charger dispenser 2200 and the charging port of the mobility vehicle 100.

Then, the gripper 2130 withdraws the charging plug 2210 from the charger dispenser 2200 and couples the charging plug 2210 to the charging port of the mobility vehicle 100, with the charging cable 2220 connected to the charging plug 2210.

In addition, in the mobility charging step S1400, the controller 2310 (see FIG. 7) of the mobility charging management unit may control output power of the charging device.

That is, the controller 2310 may selectively control output power for the plurality of charger dispensers 2200 for ultra-fast charging.

For example, in a configuration with a 3 MW power converter and 3 sets of dispensers, the controller 2310 may set a first dispenser to an output power of 2 MW, a second dispenser to an output power of 1 MW, and a third dispenser to an idle mode, instead of setting every dispenser to an output power of 1 MW.

Accordingly, the charging step for a plurality of mobility vehicles can be more efficiently realized.

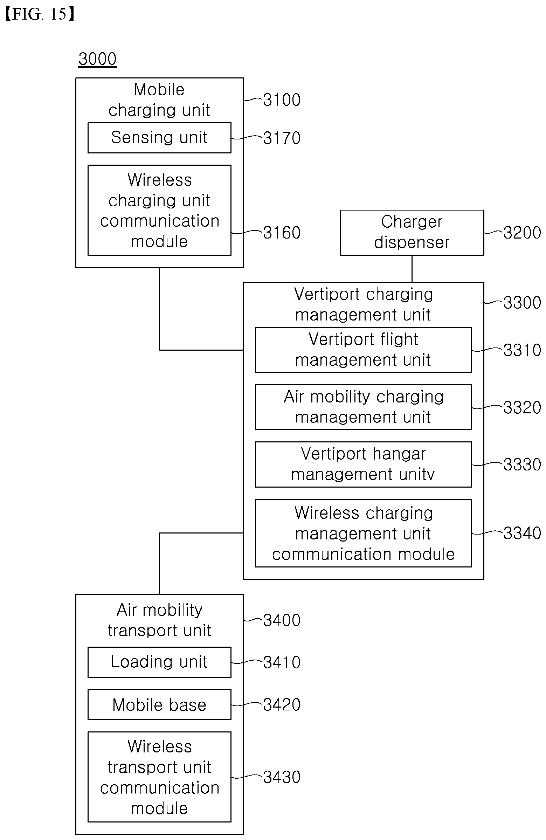

FIG. 15 is a schematic block diagram of a vertiport charging system according to one embodiment of the present invention.

Referring to FIG. 15, a vertiport charging system 3000 may include a mobile charging unit 3100, an air mobility transport unit 3400, and a vertiport charging management unit 3300.

More specifically, an air mobility charging device includes the mobile charging unit 3100 and a charger dispenser 3200.

The charger dispenser 3200 supplies power for charging to an air mobility vehicle.

The mobile charging unit 3100 charges the air mobility vehicle parked at a vertiport.

In this embodiment, the vertiport may include a hangar composed of multiple stories.

The mobile charging unit 3100 may include a sensing unit 3170 and a wireless charging unit communication module 3160 to charge an air mobility vehicle parked on each floor of the vertiport.

The wireless charging unit communication module 3160 transmits and receives location information and charging-related information to and from the air mobility transport unit 3400 and the vertiport charging management unit 3300.

The sensing unit 3170 identifies a location of the air mobility vehicle and may include a camera module or a proximity sensor.

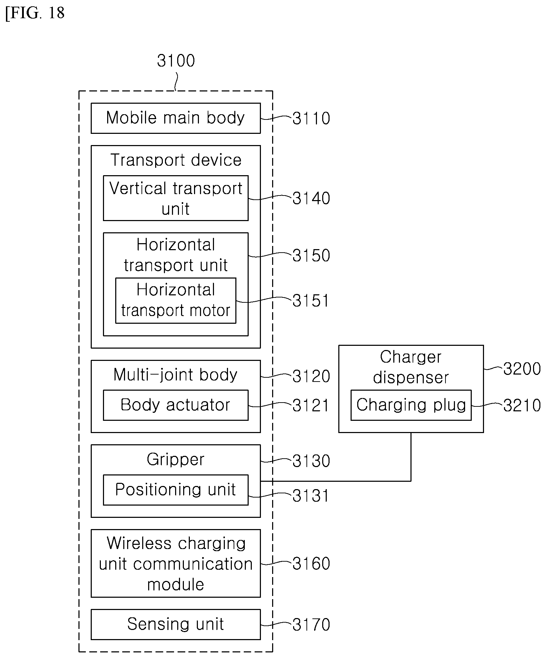

The mobile charging unit 3100 may further include a transport device 3140, 3150 (see FIG. 18) to transport the mobile charging unit within the vertiport.

The transport device 3140, 3150 transports the mobile charging unit within the vertiport.

That is, the vertiport may include a hangar on each floor and the transport device 3140, 3150 transports the mobile charging unit on each floor.

Further, the transport device 3140, 3150 transports the mobile charging unit on each floor of the vertiport.

The transport device 3140, 3150 may be embedded in the mobile main body 3110 (see FIG. 18) of the mobile charging unit.

Alternatively, the transport device 3140, 3150 may be disposed outside the mobile main body and may transport the mobile main body.

The mobile charging unit 3100 may transmit and receive location-related and charging-related information to and from the air mobility transport unit 3400 through the wireless charging unit communication module 3160.

The mobile charging unit 3100 may identify the location of the air mobility vehicle within the vertiport and may charge the air mobility vehicle under control of the vertiport charging management unit 3300.

The air mobility transport unit 3400 transports the air mobility vehicle.

To this end, the air mobility transport unit 3400 may be implemented by an air mobility parking robot.

The air mobility transport unit 3400 may include a loading unit 3410, a mobile base 3420, and a wireless transport unit communication module 3430.

The loading unit 3410 holds and supports the air mobility vehicle.

The mobile base 3420 moves the air mobility transport unit 3400 to a hangar, a takeoff area, and a landing area, of the vertiport.

The wireless transport unit communication module 3430 transmits and receives location, parking, and charging-related information to and from the mobile charging unit 3100 and the vertiport charging management unit 3300.

In addition, the air mobility transport unit 3400 may be implemented by a parking robot that moves the air mobility vehicle to the landing area, the takeoff area, and the hangar of the vertiport.

The vertiport charging management unit 3300 controls charging of the air mobility vehicle through control of the mobile charging unit 3100 and the air mobility transport unit 3400.

That is, the vertiport charging management unit 3300 controls charging of the air mobility vehicle using at least one of location information, charging-related information, and flight information of the air mobility vehicle.

To this end, the vertiport charging management unit 3300 may include a vertiport flight management unit 3310, an air mobility charging management unit 3320, a vertiport hangar management unit 3330, and a wireless charging management unit communication module 3340.

The vertiport flight management unit 3310 confirms and manages information about air mobility vehicles landing at or taking off from the vertiport according to a flight schedule.

The air mobility charging management unit 3320 may check a state of charge of an air mobility vehicle parked in the hangar of the vertiport or may calculate an estimated charging time for the air mobility vehicle for charging management and may controls charging operation based on the calculated result.

That is, the air mobility charging management unit performs prioritized charging for different air mobility vehicles based on flight information in consideration of limited charging time and resources available within the vertiport.

The vertiport hangar management unit 3330 may allocate a hangar parking area to each air mobility vehicle based on flight information and charging-related information to ensure more efficient charging operations for the air mobility vehicles.

For example, when a charging operation must be performed with minimal charging time due to an imminent takeoff, the mobile charging unit and the air mobility transport unit are dispatched to a charging area, which is adjacent to the takeoff area and allows rapid deployment of the mobile charging unit.

The wireless charging management unit communication module 3340 may transmit and receive location information, transport information, and charging-related information to and from the wireless charging module communication module 3160 and the wireless transport unit communication module 3430.

The vertiport charging management unit 3320 may selectively control output power for a plurality of charger dispensers 3200 for ultra-fast charging.

For example, when the charger consists of a 3 MW power converter and three sets of dispensers, the vertiport charging management unit 3330 may set a first dispenser to an output power of 2 MW, a second dispenser to an output power of 1 MW, and a third dispenser to an idle mode, instead of setting every dispenser to an output power of 1 MW.

Accordingly, the vertiport charging management unit 3300 can implement efficient charging of the air mobility vehicles.

In the air mobility charging system according to the embodiment constructed as described above, the mobile charging unit 3100 may transmit and receive charging-related information to and from the air mobility transport unit 3400 and may perform charging of the air mobility vehicle under control of the vertiport charging management unit 3300 while checking the location of the air mobility vehicle.

Further, the vertiport charging system 3000 according to one embodiment may include a mobile charging unit 3100 and a vertiport charging management unit 3300, which may control charging of the mobile charging unit 3100 through the configuration described above.

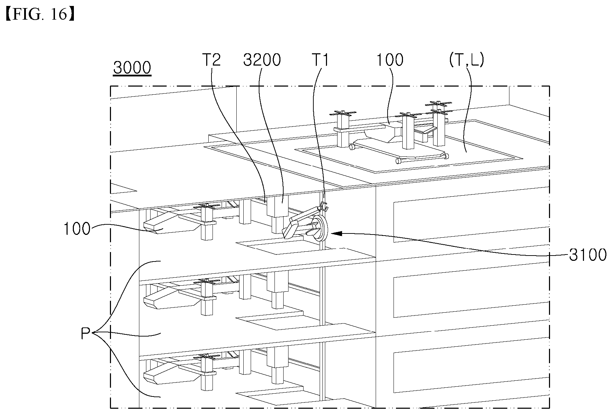

FIG. 16 is a schematic view illustrating some configuration of the vertiport charging system according to the embodiment of the present invention.

More specifically, the vertiport charging system 3000 may be applied to a vertical takeoff and landing site (vertiport), which is a takeoff and landing site for air mobility vehicles.

The vertical takeoff and landing site (vertiport) may include a takeoff area (T), a landing area (L), and a hangar (P).

The vertiport may be constructed on a rooftop of a building.

In addition, the hangar of the vertiport may have a multi-story structure and each of the takeoff area and the landing area may be selectively located on the rooftop of the building or on a rooftop of the hangar
The air mobility vehicle 100 may be transported to the landing area L, the hangar P, and the takeoff area T by the air mobility transport unit 3400 (see FIG. 15), and may be parked in the hangar P.

As shown in the drawings, a charging device of the vertiport charging system 3000 may include a mobile charging unit 3100 and a charger dispenser 3200.

The mobile charging unit 3100 may charge a parked air mobility vehicle 100 while moving in the vertical direction, which corresponds to the floor-to-floor direction of the hangar P, through a vertical transport unit.

Here, the charger dispenser 3200 may be provided to each floor in the hangar.

The mobile charging unit 3100 may be moved to a charging area to charge the air mobility vehicle 100 while being guided along the vertical path T1 and horizontal path T2 of the vertiport.

In this embodiment, when the horizontal transport unit moves the mobile main body 3110 (see FIG. 18) along the horizontal path T2, the mobile charging unit 3100 may control the location of the multi-joint body 3120 (see FIG. 18) such that the horizontal movement of the mobile charging unit 3100 is not obstructed by the charger dispenser 1200.

Alternatively, the charger dispenser 1200 may be disposed so as not to obstruct the horizontal movement of the mobile charging unit 1100 when the mobile main body 1110 moves along the horizontal path T2.

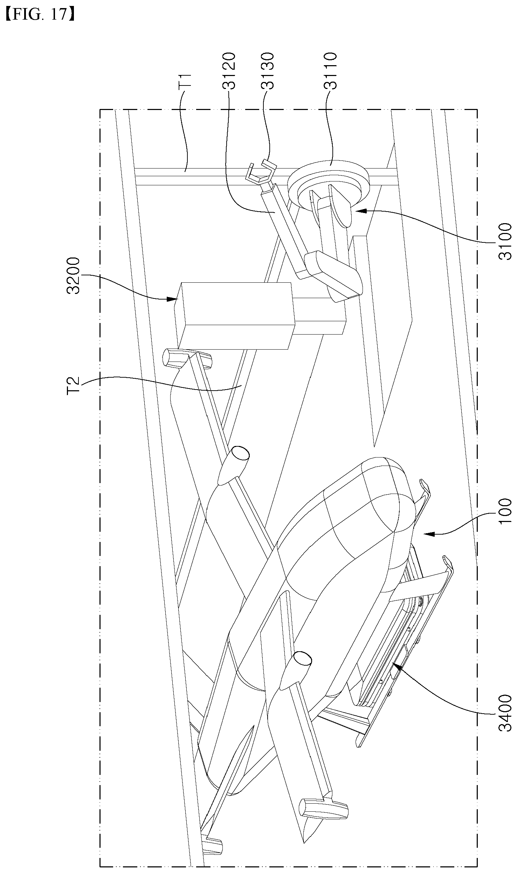

FIG. 17 is a schematic view illustrating some configuration of a vertiport charging system according to another embodiment of the present invention.

Referring to FIG. 17, the vertiport charging system 3000 includes a mobile charging unit 3100, a charger dispenser 3200, and an air mobility transport unit 3400.

The mobile charging unit 3100 connects a charging plug of the charger dispenser 3200 (see 3210 in FIG. 18) to a charging port of the air mobility vehicle 100.

The mobile charging unit 3100 may include a mobile main body 3110, a multi-joint body 3120, and a gripper 3130.

With an air mobility vehicle 100 loaded on the air mobility transport unit 3400, the air mobility transport unit 3400 may be moved to be adjacent to the mobile charging unit 3100 and the charger dispenser 3200.

That is, the air mobility transport unit 3400 moves the air mobility vehicle 100 loaded thereon to a location where the air mobility vehicle 100 can be charged by the mobile charging unit 3100 and the charger dispenser 3200.

Here, the air mobility transport unit 3400 may be located within a charging available distance of the multi-joint body 3120 and the gripper 3130 of the mobile charging unit 3100.

By way of example, the air mobility transport unit 3400 may position the urban air mobility vehicle 100 in a preset parking area within the hangar. The preset parking area may be provided with the charger dispenser 3200, and the charging available distance may refer to a distance that the charging plug 3210 (see FIG. 18) can be connected to the urban air mobility vehicle 100 by the multi-joint body 3120 and the gripper 3130. In addition, the air mobility transport unit 3400 may be moved while transmitting and receiving information, such as location information, a charging area, and an estimated time of arrival, to and from the mobile charging unit 3100.

FIG. 18 is a schematic block diagram of a mobile charging unit in a vertiport charging system according to one embodiment of the present invention.

Referring to FIG. 18, an air mobility charging device includes a mobile charging unit 3100 and a charger dispenser 3200.

More specifically, the mobile charging unit 3100 includes a mobile main body 3110, a multi-joint body 3120, a gripper 3130, a transport device 3140, 3150, a wireless charging unit communication module 3160, and a sensing unit 3170.

The charger dispenser 3200 supplies power to an air mobility vehicle and includes a charging plug 3210.

The transport device 3140, 3150 of the mobile charging unit 3100 transports the mobile main body 3110.

The transport device 3140, 3150 may be mounted on the mobile main body 3110 to move the mobile main body 3110.

The transport devices 3140, 3150 may be disposed outside the mobile main body 3110 to transport the mobile main body 3110.

The transport device 3140, 3150 may include a vertical transport unit 3140 and a horizontal transport unit 3150.

The vertical transport unit 3140 transports the mobile charging unit in the vertical direction. Accordingly, the vertical transport unit 3140 can transport the mobile charging unit from one floor to another floor of a hangar in a vertiport.

The vertical transport unit 3140 may be implemented by a ball screw or a timing belt in various ways.

The horizontal transport unit 3150 transports the mobile charging unit in the horizontal direction. Accordingly, the horizontal transport unit 3150 can charge a plurality of air mobility vehicles while moving the mobile charging unit laterally on a corresponding floor of the hangar.

The horizontal transport unit 3150 may include a horizontal transport motor 3151.

Next, the multi-joint body 3120 includes a body actuator 3121.

The body actuator 3121 moves each joint of the multi-joint body 3120.

That is, the body actuator selectively moves the multi-joint body 3120 including a plurality of articulated members. A servomotor, a stepper motor, or the like may be disposed between the articulated members. This structure allows the multi-joint body 3120 to implement various movements at various angles in a three-dimensional space, and can facilitate coupling of the charging plug 3210 of the charger dispenser 3200 to the charging port of the urban air mobility vehicle.

The gripper 3130 couples the charging plug 3210 of the charger dispenser 3200 to a charging port of the air mobility vehicle.

The gripper 3130 is mounted on the multi-joint body 3120.

The gripper 3130 may be provided to a distal end of the multi-joint body 3120. The gripper 3130 may be rotatably coupled to the multi-joint body 3120.

The gripper 3130 may include a positioning unit 3131.

The positioning unit 3131 determines locations of the charging plug 3210 of the charger dispenser 3200 and the charging port of the air mobility vehicle.

The positioning unit 3131 may include a camera module or a proximity sensor.

As described above, the wireless charging unit communication module 3160 transmits and receives location information and charging-related information to and from the air mobility transport unit 3400 and the vertiport charging management unit 3300.

The sensing unit 3170 identifies a location of the air mobility vehicle and may include a camera module or a proximity sensor.

The gripper 3130 may be provided with a gripper actuator (not shown).

The gripper actuator actuates the gripper 3130. The gripper actuator may include a servomotor, a stepper motor, a DC motor, or the like, and may be operate to allow the gripper 3130 to grip the charging plug 3210.

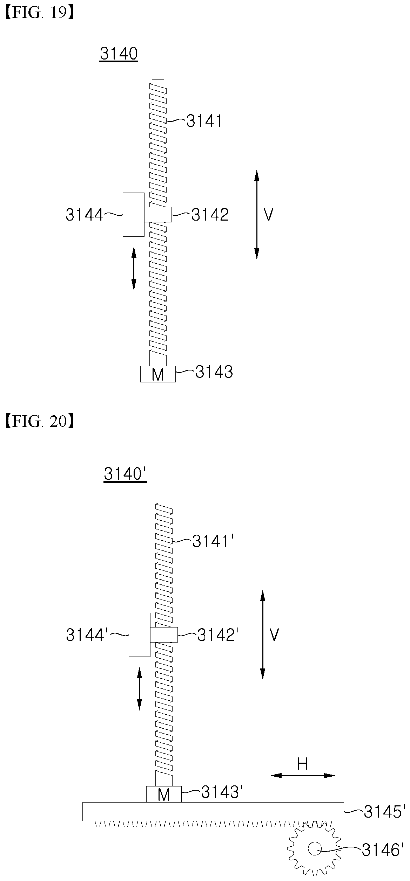

FIG. 19 is a schematic view of a transport device according to a first embodiment in the mobile charging unit shown in FIG. 18.

More specifically, the transport device refers to the vertical transport unit 3140 and is configured to move the mobile main body 1110 (see FIG. 18) in the vertical direction V.

That is, the vertical transport unit 3140 transports the mobile main body 3110 from one floor to another floor of the hangar of the vertiport.

To this end, the vertical transport unit 3140 may include a ball screw 3141, a ball nut 3142, and a vertical transport motor 3143.

The ball screw 3141 is disposed to extend in the vertical direction V of the vertiport, i.e., in the floor-to-floor direction.

The ball screw 3141 is coupled to a ball nut 3142.

The ball screw 3141 is coupled to the vertical transport motor 3143.

The ball screw 3141 is rotated by operation of the vertical transport motor 3143 and the ball nut 3142 is raised or lowered by rotation of the ball screw 3141.

The mobile main body 3110 is coupled to the ball nut 3142 to be raised or lowered together with the ball nut 3142.

The vertical transport unit 3140 may further include a transport body 3144 coupled to the ball nut 3142.

The mobile main body 3110 may be coupled to the transport body 3144, and the transport body 3144 and the mobile main body 3110 may be raised or lowered by operation of the vertical transport motor 3143.

FIG. 20 is a schematic view of a transport device according to a second embodiment in the mobile charging unit shown in FIG. 18.

More specifically, a transport device 3140' includes a horizontal transport unit in addition to the vertical transport unit 3140 shown in FIG. 18.

Referring to FIG. 20, the transport unit 3140' includes a ball screw 3141', a ball nut 3142', a vertical transport motor 3143', a transport body 3144', a rack gear 3145', a pinion gear 3146', and a horizontal transport motor 3151 (see FIG. 18).

The ball screw 3141', the ball nut 3142', the vertical transport motor 3143', and the transport body 3144' are the same as the ball screw 3141, ball nut 3142, the vertical transport motor 3143, and the transport body 3144 shown in FIG. 19, and detailed descriptions thereof will be omitted herein.

The vertical transport motor 3143' is coupled to the rack gear 3145'.

The rack gear 3145' is mated with the pinion gear 3146', which is coupled to the horizontal transport motor 3151 (see FIG. 18).

In the transport device 3140 according to the second embodiment constructed as described above, when the pinion gear 3146' is rotated by operation of the horizontal transport motor, the rack gear 3145' may be moved linearly, i.e., in the horizontal direction H, in conjunction with rotation of the pinion gear 3146'. In addition, the vertical transport motor 3143', the ball screw 3141', the ball nut 3142', and the transport body 3144' are moved in the horizontal direction in conjunction with movement of the rack gear 3145'.

Accordingly, the transport device 3140' can transport the transport body 3144' in the horizontal direction H or in the vertical direction V.

That is, the mobile main body 3110 coupled to the transport body 3144' may be transported from one floor to another floor of the hangar of the vertiport in the vertical direction V, and may be transported on the corresponding floor in the horizontal direction H.

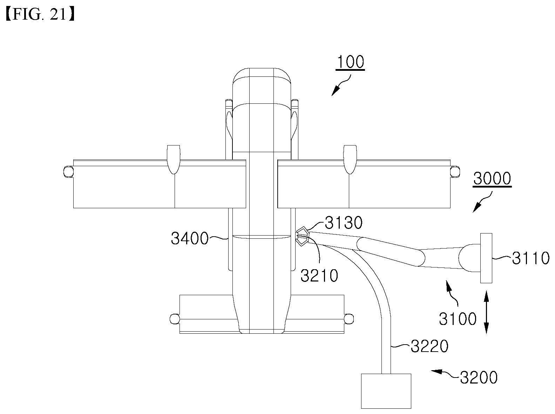

FIG. 21 is a schematic view illustrating a first operation mode of a vertiport charging system according to one embodiment of the present invention.

Referring to FIG. 21, an air mobility vehicle 100 parked in a hangar is charged by the mobile charging unit 3100, as an air mobility vehicle charging device, and the air mobility transport unit 3400.

To this end, the vertiport charging management unit 3300 (see FIG. 15) moves the air mobility transport unit 3400 with the air mobility vehicle 100 loaded thereon to a charging area.

Here, the vertiport charging management unit 3300 may move the air mobility transport unit 3400 to the charging area of the hangar in consideration of flight information, a state of charge and an estimated charging time of the air mobility vehicle, and hangar location information.

With the air mobility vehicle 100 loaded on the air mobility transport unit 3400, the air mobility transport unit 3400 is moved to the charging area of the mobile charging unit 1100.

Next, the mobile main body 3110 of the mobile charging unit 3100 is vertically transported to a floor on which the air mobility is parked.

In addition, the mobile main body 3110 may be horizontally transported to an optimal position to couple the charging plug of the charger dispenser 3200 to the charging port of the air mobility vehicle on the corresponding floor.

The mobile charging unit 3100 couples the charging plug of the charger dispenser 3200 to the charging port (not shown) of the air mobility vehicle.

Here, a camera module or a sensor, which corresponds to the positioning unit 3131 (see FIG. 18) mounted on the gripper 3130 of the mobility charging robot 3100, determines the location of the charging plug 2210 of the charger dispenser.

Then, when the charging plug 3210 is withdrawn from the charger dispenser 3200, the gripper 3130 couples the charging plug 3210 to the charging port of the mobility vehicle 100, with the charging plug 3210 connected to the charging cable 3220.

With the structure described above, the vertiport charging system enables air mobility vehicles to be charged safely and quickly using the mobile charging unit.

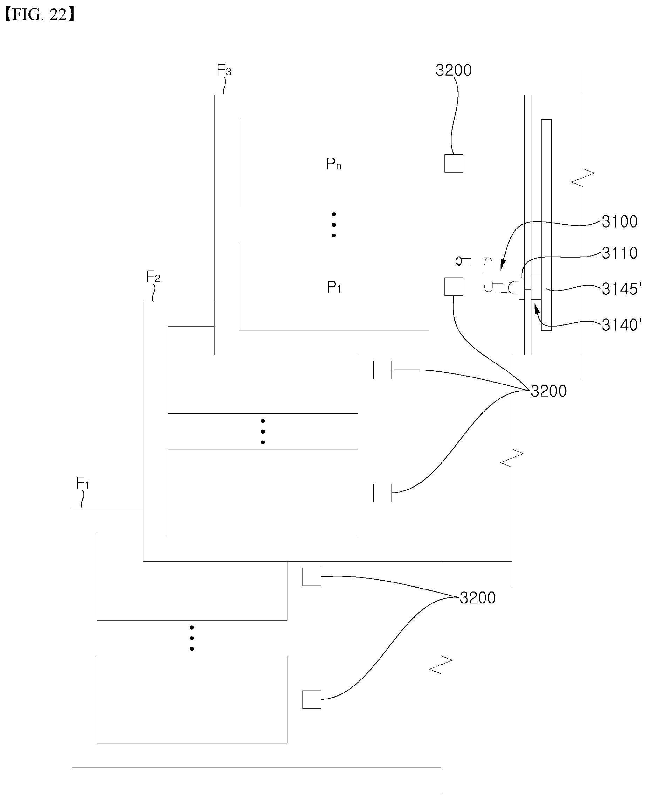

FIG. 22 is a schematic view illustrating a second operational mode of the vertiport charging system according to the embodiment of the present invention.

Referring to FIG. 22, parking areas P1...Pn are formed on floors F1, F2, F3 of the hangar of the vertiport, respectively.

An air mobility vehicle is transported to a parking area by the air mobility transport unit 3400 (see FIG. 21) and charged by the mobile charging unit 3100.

Here, the mobile main body 3110 of the mobile charging unit 3100 may be vertically transported to each floor F1, F2, F3 through the transport device 3140' and may be horizontally moved on each floor through the rack gear 3145'.

The vertiport charging management unit 3300 (see FIG. 15) identifies flight information through the vertiport flight management unit 3310, identifies an optimal parking area through the vertiport hangar management unit 3330, and transports the air mobility vehicle to the parking area through the air mobility transport unit 3400 (see FIG. 21).

Here, the parking area of the hangar may be set in consideration of the state of charge and charging time of the air mobility vehicle.

The vertiport charging management unit may dispatch the mobile charging unit to the parking area in consideration of the transport time of the air mobility vehicle.

With the structure as described above, the vertiport charging system according to the embodiment enables transport of an air mobility vehicle, and setting of the transport, charging time, and charging location of the mobile charging unit.

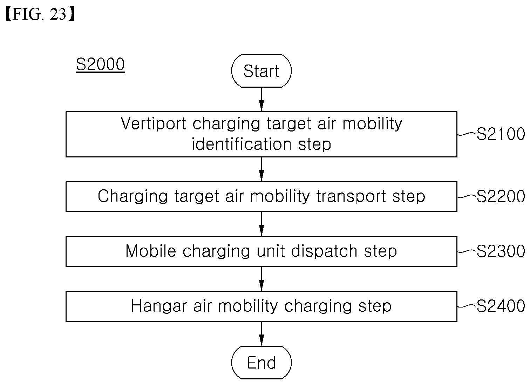

FIG. 23 is a schematic flowchart illustrating a method of controlling the vertiport charging system according to the embodiment of the present invention.

Referring to FIG. 23, a method of controlling the vertiport charging system (S2000) includes a vertiport charging target air mobility identification step (S2100), a charging target air mobility transport step (S2200), a mobile charging unit dispatch step (S2300), and a hangar air mobility charging step (S2400).

More specifically, in the charging target air mobility identification step (S2100), a charging target air mobility vehicle is identified among air mobility vehicles located in a landing area of a vertiport.

The vertiport charging management unit 3300 (see FIG. 15) may identify an air mobility vehicle required to be charged and may transmit the identified information to each of the air mobility transport unit 3400 (see FIG. 15) and the mobile charging unit 3100 (see FIG. 15).

The vertiport flight management unit 3310 may identify an air mobility vehicle required to be charged preferentially according to a flight schedule.

The vertiport flight management unit 3310 may identify air mobility vehicles scheduled to land at the vertiport according to the flight schedule and may determine the air mobility vehicle to be charged preferentially.

In the vertiport charging target air mobility identification step (S2100), the charging target air mobility vehicle may be identified among the air mobility vehicles located in the hangar of the vertiport.

In the charging target air mobility transport step (S2200), the air mobility transport unit transports the charging target air mobility vehicle to a charging area of the hangar.

Here, the air mobility transport unit 3400 (see FIG. 15) may obtain charging-related information from the air mobility charging management unit 3300 (see FIG. 15) and may transport the air mobility vehicle to the corresponding charging area of the hangar.

Furthermore, the air mobility transport unit 3400 may transmit information about a transport time and a transport distance to the charging area to the vertiport charging management unit 3300 through the wireless charging unit communication module 3160, and the vertiport charging management unit 3300 may transmit the information to the mobile charging unit 3100 in real time.

That is, the vertiport charging management unit 3300 may control transport of the air mobility transport unit 3400 in consideration of information about an estimated time of arrival of the air mobility transport unit 3400 at the charging area and an air mobility vehicle required to be charged preferentially among the plurality of air mobility vehicles.

In addition, the vertiport hangar management unit 3330 may assign a hangar parking area of the air mobility vehicle to the air mobility transport unit 3400 as a charging area of the hangar in order to efficiently implement charging of the air mobility vehicle using the flight information and the charging-related information.

In the mobile charging unit dispatch step S2300, the mobile charging unit 3100 is dispatched to the charging area of the air mobility vehicle. Here, the vertiport charging management unit 3300 may dispatch the mobile charging unit 3100 to the charging area of the air mobility vehicle required to be charged preferentially, in consideration of at least one of a location, an estimated time of arrival, and a flight schedule of the air mobility transport unit 3400.

In the hangar air mobility charging step S2400, the air mobility vehicle parked in the charging area of the hangar of the vertiport is charged through the mobile charging unit 3100.

That is, the mobile charging unit 3100 couples a charging plug of the charger dispenser 3200 to a charging port of the air mobility vehicle.

Here, the air mobility charging step S2400 may include the step of determining a location of the charging plug and the step of determining a location of the charging port.

To this end, the positioning unit 3131 (see FIG. 18) mounted on the gripper 3130 of the mobile charging unit 3100 determines the locations of the charging plug 3210 of the charger dispenser 3200 and the charging port of the air mobility vehicle 100.

Then, the gripper 3130 withdraws the charging plug 3210 from the charger dispenser 3200 and couples the charging plug 3210 to the charging port of the air mobility vehicle 100.

In addition, in the air mobility charging step S2400, the air mobility charging management unit 1320 may control output power of the charging device.

That is, the air mobility charging management unit 3320 may selectively control output power for the plurality of charger dispensers 3200 for ultra-fast charging.

For example, in a configuration with a 3 MW power converter and 3 sets of dispensers, the controller 2310 may set a first dispenser to an output power of 2 MW, a second dispenser to an output power of 1 MW, and a third dispenser to an idle mode, instead of setting every dispenser to an output power of 1 MW.

Accordingly, the charging step for a plurality of air mobility vehicles can be more efficiently implemented.

## Claims

1. A mobility charging robot comprising:
a mobile main body;
a multi-joint body coupled to the mobile main body and provided with a gripper; and
a transport device configured to move the mobile main body,
wherein the transport device comprises a vertical transport unit configured to move the mobile main body in a vertical direction.

2. The mobility charging robot according to claim 1, wherein the gripper is provided with a positioning unit configured to determine locations of a charging plug and a charging port of a mobility vehicle.

3. The mobility charging robot according to claim 1, wherein the vertical transport unit comprises a ball screw, a ball nut meshed with the ball screw, and a vertical transport motor rotating the ball screw.

4. The mobility charging robot according to claim 3, wherein the vertical transport unit further comprises a transport body coupled to the ball nut and the mobile main body is coupled to the transport body.

5. The mobility charging robot according to claim 1, wherein the transport device further comprises a horizontal transport unit configured to move the mobile main body in a horizontal direction.

6. The mobility charging robot according to claim 5, wherein the horizontal transport unit comprises a rack gear, a pinion gear meshed with the rack gear, and a horizontal transport motor rotating the pinion gear.

7. A mobility charging system comprising:
a mobility charging robot comprising a gripper, a mobile main body provided with the gripper, a vertical transport unit configured to move the mobile main body in a vertical direction corresponding to a floor-to-floor direction of a hangar; and
a charger dispenser located on each floor of the hangar,
wherein the mobility charging robot is moved to each floor of the hangar through the vertical transport unit, and
a charging plug of the charger dispenser is coupled to a charging port of a mobility vehicle parked in the hangar by the mobility charging robot.

8. The mobility charging system according to claim 7, wherein the gripper is provided with a positioning unit configured to determine locations of the charging plug and the charging port of the mobility vehicle.

9. The mobility charging system according to claim 7, further comprising:
a horizontal transport unit configured to move the mobile main body in a horizontal direction.

10. A mobility charging system comprising:
a mobility charging device configured to charge a mobility vehicle;
a mobility parking robot configured to transport the mobility vehicle; and
a mobility charging management unit configured to transmit and receive charging-related information to and from the mobility charging device and the mobility parking robot and to manage charging of the mobility vehicle.

11. The mobility charging system according to claim 10, wherein the mobility charging management unit comprises a controller using flight information and state-of-charge information of the mobility vehicle and controlling operation of the mobility charging device and the mobility parking robot.

12. The mobility charging system according to claim 11, wherein
the mobility charging device comprises a wireless charging robot-transceiver module,
the mobility parking robot comprises a wireless parking robot-transceiver module, and
the mobility charging management unit comprises a wireless charging management unit-transceiver module configured to transmit and receive parking and charging-related information to and from the wireless charging robot-transceiver module and the wireless parking robot-transceiver module.

13. The mobility charging system according to claim 10, wherein the mobility parking robot comprises a loading unit configured to hold and support the mobility vehicle, and a mobile base configured to transport the mobility vehicle.

14. The mobility charging system according to claim 10, wherein
the mobility charging device comprises a mobility charging robot and a charger dispenser,
the mobility charging robot comprising a mobile main body, a multi-joint body coupled to the mobile main body and provided with a gripper, and a transport device configured to move the mobile main body,
the transport device comprises a vertical transport module configured to move the mobile main body in a vertical direction, and
power for charging the mobility vehicle is supplied to the charger dispenser.

15. The mobility charging system according to claim 14, wherein the gripper is provided with a positioning unit configured to determine locations of a charging plug of the charger dispenser and a charging port of the mobility vehicle.

16. The mobility charging system according to claim 14, wherein the transport device further comprises a horizontal transport unit configured to move the mobile main body in a horizontal direction.

17. The mobility charging system according to claim 16, wherein the horizontal transport unit comprises a rack gear, a pinion gear meshed with the rack gear, and a horizontal transport motor rotating the pinion gear.

18. The mobility charging system according to claim 17, wherein the vertical transport module is coupled to the pinion gear and comprises a ball screw, a ball nut meshed with the ball screw, and a vertical transport motor rotating the ball screw.

19. The mobility charging system according to claim 18, wherein the vertical transport module further comprises a transport body coupled to the ball nut and the mobile main body is coupled to the transport body.

20. The mobility charging system according to claim 14, wherein the charger dispenser comprises a charging plug coupled to a charging port of the mobility vehicle by the gripper, and a charging cable to which the charging plug is coupled.

21. A method of controlling a mobility charging system comprising:
a charging target mobility identification step in which a charging target mobility vehicle is identified;
a charging target mobility transport step in which a mobility parking robot transports the charging target mobility vehicle to a charging area of a hangar;
a mobility charging robot dispatch step in which a mobility charging robot is dispatched to the charging area; and
a mobility charging step in which the mobility charging robot couples a charging plug of a charger dispenser to a charging port of the mobility vehicle.

22. The method according to claim 21 wherein, in the charging target mobility transport step, the mobility parking robot transmits information about a transport time and a transport distance to a mobility charging management unit, and the mobility charging management unit transmits charging-related information based on the information to the mobility charging robot in real time.

23. A vertiport charging system comprising:
a mobile charging unit comprising a wireless charging unit communication module and configured to charge an air mobility vehicle parked in a vertiport;
a charger dispenser supplied with supplying power for charging the air mobility vehicle and disposed in a hangar of the vertiport;
an air mobility transport unit comprising a wireless transport unit communication module and configured to transport the air mobility vehicle within the vertiport; and
a vertiport charging management unit comprising a wireless charging management unit communication module and configured to control charging of the air mobility vehicle through control of the mobile charging unit and the air mobility transport unit.

24. The vertiport charging system according to claim 23, wherein the vertiport charging management unit comprises:
a vertiport flight management unit configured to confirm and manage information of air mobility vehicles landing at or taking off from the vertiport according to a flight schedule for charging management of the air mobility vehicle;
a vertiport charging management unit configured to check a state of charge of an air mobility vehicle parked in a hangar of the vertiport or to calculate an estimated charging time thereof; and
a vertiport hangar management unit configured to assign a parking area of the hangar to the air mobility vehicle.

25. The vertiport charging system according to claim 23, wherein the air mobility transport part further comprises a loading unit configured to hold and support the air mobility vehicle, and a mobile base configured to transport the air mobility to the hangar and a takeoff area.

26. The vertiport charging system according to claim 23, wherein
the wireless charging management unit communication module is connected to the wireless charging unit communication module and the wireless transport unit communication module to transmit and receive parking and charging-related information of the air mobility vehicle, and
at least one of movement information, charging-related information, and flight information of the air mobility vehicle is used by the vertiport charging management unit.

27. The vertiport charging system according to claim 23, wherein the mobile charging unit comprises: a mobile main body; a multi-joint body coupled to the mobile main body and provided with a gripper; and a transport device configured to move the mobile main body and comprising a vertical transport unit configured to move the mobile main body in a vertical direction.

28. The vertiport charging system according to claim 27, wherein the gripper is provided with a positioning unit configured to determine locations of a charging plug of the charger dispenser and a charging port of the air mobility vehicle.

29. The vertiport charging system according to claim 27, wherein the transport device further comprises a horizontal transport unit configured to move the mobile main body in a horizontal direction.

30. The vertiport charging system according to claim 29, wherein the horizontal transport unit comprises a rack gear, a pinion gear meshed with the rack gear, and a horizontal transport motor rotating the pinion gear.

31. The vertiport charging system according to claim 30, wherein the vertical transport module is coupled to the pinion gear and comprises a ball screw, a ball nut meshed with the ball screw, and a vertical transport motor rotating the ball screw.

32. The vertiport charging system according to claim 31, wherein the vertical transport module further comprises a transport body coupled to the ball nut and the mobile main body is coupled to the transport body.

33. A method of controlling a vertiport charging system comprising:
a vertiport charging target air mobility identification step in which a vertiport charging management unit identifies a charging target air mobility vehicle;
a charging target air mobility transport step in which the vertiport charging management unit transports the charging target air mobility vehicle to a charging area of a hangar through an air mobility transport unit;
a mobile charging unit dispatch step in which the vertiport charging management unit dispatches a mobile charging unit to the charging area; and
a hangar air mobility charging step in which the mobile charging unit couples a charging plug of a charger dispenser to a charging port of the air mobility vehicle parked in the charging area of the hangar of the vertiport.

34. The method according to claim 33, wherein, in the charging target air mobility transport step, information about a transport time and a transport distance of the air mobility transport unit is transmitted to the vertiport charging management unit, and the vertiport charging management unit transmits charging-related information based on the information to the mobile charging unit in real time.

35. The method according to claim 33, wherein, in the mobile charging unit dispatch step, the vertiport charging management unit dispatches the mobile charging unit to a charging area of an air mobility vehicle required to be charged preferentially in consideration of at least one of a location, an estimated time of arrival and a flight schedule of the air mobility vehicle.

36. A vertiport charging system comprising:
a mobile charging unit comprising a wireless charging unit communication module and configured to charge an air mobility vehicle parked in a vertiport; and
a charger dispenser supplied with supplying power for charging the air mobility vehicle and disposed in a hangar of the vertiport; and
a vertiport charging management unit comprising a wireless charging management unit communication module and configured to control charging of the air mobility vehicle through control of the mobile charging unit.

37. The vertiport charging system according to claim 36, wherein the vertiport charging management unit comprises:
a vertiport flight management unit configured to confirm and manage information of air mobility vehicles landing at or taking off from the vertiport according to a flight schedule for charging management of the air mobility vehicle;
a vertiport charging management unit configured to check a state of charge of an air mobility vehicle parked in a hangar of the vertiport or to calculate an estimated charging time thereof; and
a vertiport hangar management unit configured to assign a parking area of the hangar to the air mobility vehicle.

38. The vertiport charging system according to claim 36, wherein the mobile charging unit comprises a mobile main body, a multi-joint body coupled to the mobile main body and provided with a gripper, and a transport device configured to move the mobile main body and comprising a vertical transport unit configured to move the mobile main body in a vertical direction,
the gripper being provided with a positioning unit configured to determine locations of a charging plug of the charger dispenser and a charging port of the air mobility vehicle.

39. The vertiport charging system according to claim 38, wherein the transport device further comprises a horizontal transport unit configured to move the mobile main body in a horizontal direction,
the horizontal transport unit comprising a rack gear, a pinion gear meshed with the rack gear, and a horizontal transport motor rotating the pinion gear.
